# FASCICULE DE BREVET EUROPEEN

(11) **EP 3 084 377 B1**
(45) Date de publication et mention de la délivrance du brevet: **15.04.2020**
(21) Numéro de dépôt: 14808919.6
(22) Date de dépôt: 01.12.2014
(51) Int. Cl.: G01J 5/22, H04N 5/33, H04N 5/365

(54) **CIRCUIT DE MESURE POUR DETECTEUR BOLOMETRIQUE**
MESSSCHALTUNG FÜR EINEN BOLOMETRISCHEN DETEKTOR
MEASUREMENT CIRCUIT FOR BOLOMETRIC DETECTOR

(30) Priorité: 19.12.2013 FR 1363037
(43) Date de publication de la demande: 26.10.2016
(73) Titulaire: Commissariat à l'Energie Atomique et aux Energies Alternatives, 75015 Paris (FR)
(72) Inventeur: ALACOQUE, Laurent, F-38340 Voreppe (FR)
(74) Mandataire: Cabinet Beaumont
(86) Numéro de dépôt international: PCT/EP2014/076153
(87) Numéro de publication internationale: WO 2015/090925

(56) Documents cités:
- EP-A2- 2 302 341
- WO-A1-2010/106286

## Description

### Domaine

La présente description concerne de façon générale les circuits électroniques et, plus particulièrement, un circuit de mesure exploitant un capteur résistif de type bolomètre. L'invention concerne plus particulièrement la réalisation d'un imageur infrarouge.

### Exposé de l'art antérieur

Un bolomètre est un élément résistif dont la valeur varie avec la température. Dans un imageur thermique, les résistances respectives de différents bolomètres, généralement disposés en matrice dans laquelle chaque bolomètre représente un pixel, varient avec un flux infrarouge provenant de la scène visée.

Pour exploiter la valeur captée par un bolomètre, on impose généralement une tension afin de mesurer le courant traversant l'élément résistif.

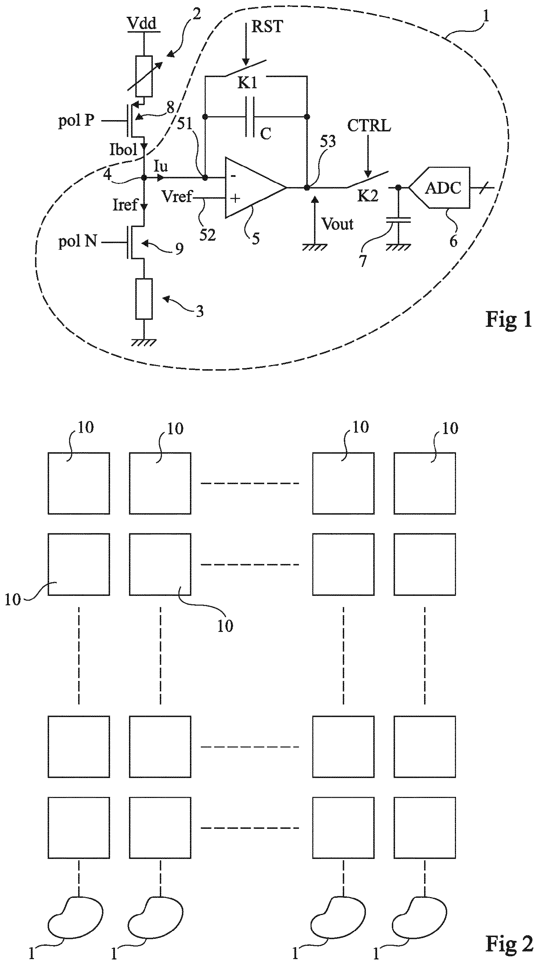

La figure 1 représente, de façon schématique, un exemple usuel de circuit 1 de mesure utilisant un bolomètre 2.

Le bolomètre 2 est exposé à la zone dont on souhaite capter le rayonnement infrarouge. La résistance du bolomètre varie en fonction de l'échauffement donc du rayonnement infrarouge reçu, mais également, au premier ordre, de la température du circuit lui-même, qui est susceptible de varier sans relation avec la scène visée.

Le bolomètre 2 est connecté en série avec un élément de référence 3 constitué d'un bolomètre du même type que l'élément 2, et dont le rôle est d'isoler, du courant Ibol traversant le bolomètre 2, la portion qui représente le courant de rayonnement utile. L'élément de référence 3 n'est pas sensible au rayonnement infrarouge de la scène à mesurer. Typiquement, on utilise un bolomètre, écranté par un écran thermique qui masque l'élément résistif 3, ou un bolomètre modifié pour avoir une conductance thermique très élevée et qui est très fortement influencé par la température du circuit (bolomètre de compensation).

Pour permettre la mesure, les bolomètres 2 et 3 doivent voir, à leurs bornes, une tension fixe identique. Pour cela, chaque bolomètre est généralement en série avec un transistor MOS, respectivement 8, 9, par exemple à canal P pour le bolomètre 2 et à canal N pour le bolomètre 3. Le transistor 9 est connecté entre le transistor 8 et le bolomètre 3, connecté à la masse. Le transistor 8, respectivement 9, reçoit sur sa grille une tension de polarisation polP, respectivement polN, correspondant, au premier ordre, à la tension souhaitée aux bornes du bolomètre concerné à une tension de seuil de transistor près. Les signaux de polarisation sont générés de sorte que le bolomètre de référence 3 voit à ses bornes une tension de même valeur que le bolomètre de mesure 2 et se trouve traversé par un courant Iref.

Le courant Iu prélevé au point milieu 4 de l'association en série des bolomètres (dans l'exemple représenté en figure 1), entre le transistor 8 et le transistor 9, est exploité en tant que courant représentatif du rayonnement infrarouge reçu par le bolomètre 2. Le procédé ci-dessus est généralement dénommé ébasage, le courant Iu étant un courant "ébasé". En considérant que les bolomètres 2 et 3 sont rigoureusement identiques et qu'ils subissent le même environnement thermique local, le courant Iu ne dépend que de l'échauffement dû au rayonnement reçu par le pixel.

On utilise un intégrateur, symbolisé sous la forme d'un amplificateur opérationnel 5 dont une entrée 51, par exemple inverseuse (-), est reliée au point milieu 4 entre les éléments 2 et 9 et dont une entrée 52, par exemple non-inverseuse (+), reçoit une tension de repos Vref. La sortie 53 de l'amplificateur 5 est rebouclée sur son entrée 51 par un élément capacitif C. Un interrupteur K1, commandé par un signal RST, définit la période d'intégration en réinitialisant périodiquement la tension de sortie Vout à la valeur Vref.

La tension de sortie Vout est convertie numériquement (convertisseur analogique/numérique 6, ADC) au rythme des périodes d'intégration, un interrupteur K2 étant intercalé entre la sortie de l'amplificateur 5 et un condensateur 7 placé sur l'entrée du convertisseur 6 et étant fermé par un signal de commande CTRL à chaque fin de période d'intégration pour commander la conversion.

La figure 2 illustre, de façon très schématique, une réalisation d'un imageur bolométrique. Un tel imageur est constitué d'une matrice de cellules 10 organisées en lignes et en colonnes, chaque cellule 10 incorporant un élément bolométrique 2. Plusieurs éléments bolométriques 2 d'une même colonne partagent un même circuit de mesure 1 du type illustré en relation avec la figure 1. Des circuits de sélection non représentés permettent de sélectionner individuellement les bolomètres d'une même colonne pour une mesure par leur circuit commun.

Une difficulté réside dans le fait que l'échauffement du bolomètre de mesure 2 se traduit en une différence de température très faible d'un pixel à l'autre de la structure d'imageur, la résistance du bolomètre étant essentiellement dépendante de la température du circuit. Par conséquent, pour pouvoir exploiter les mesures, le circuit 1 doit être très sensible. En particulier, l'intégrateur 5 doit présenter un gain élevé. Une conséquence est qu'il devient alors sensible à la précision de l'ébasage (compensation opérée par l'élément de référence 3). Par ailleurs, il est généralement nécessaire de prévoir un élément de régulation de la température du circuit du fait des variations importantes de température susceptibles de provoquer des erreurs de mesure.

Ainsi, la moindre dispersion technologique entre les bolomètres engendre une différence importante dans les réponses des pixels.

Par ailleurs, la précision souhaitée entraîne un risque de saturation de l'intégrateur en cas d'erreur d'ébasage.

### Résumé

Un mode de réalisation de la présente description vise un circuit de mesure pour capteur résistif qui pallie tout ou partie des inconvénients des circuits de mesure usuels.

Un autre mode de réalisation vise à proposer une solution évitant tout risque de saturation de la cellule d'intégration en cas d'imprécision du courant d'ébasage.

Un autre mode de réalisation vise à proposer une solution évitant le recours à un convertisseur analogique-numérique précis en sortie de l'intégrateur.

Ainsi, un mode de réalisation prévoit un circuit tel que défini par la revendication 1.

Un mode de réalisation prévoit également un circuit imageur, dans lequel l'intégrateur délivre un signal de sortie alternativement croissant et décroissant selon que le premier courant de référence prend une première ou une deuxième valeur, la valeur du signal de sortie de l'intégrateur oscillant autour d'un niveau de référence, ledit convertisseur analogique-numérique et ledit convertisseur numérique-analogique réalisant ainsi un circuit d'asservissement de la sortie de l'intégrateur sur ledit niveau de référence.

Selon un mode de réalisation, le convertisseur analogique-numérique est un comparateur du niveau de sortie de l'intégrateur par rapport à un seuil et délivre un mot numérique sur un seul bit.

Selon un mode de réalisation, le convertisseur analogique-numérique délivre un mot numérique sur plusieurs bits.

Selon un mode de réalisation, la commande d'échantillonnage est un signal périodique ayant une fréquence d'échantillonnage supérieure à une fréquence de réinitialisation de l'intégrateur.

Selon un mode de réalisation, la fréquence d'échantillonnage est au moins 10 fois plus élevée que la fréquence de réinitialisation de l'intégrateur.

Selon un mode de réalisation, ledit convertisseur numérique-analogique reçoit une information représentative d'un deuxième courant de référence et le premier courant délivré par le convertisseur numérique-analogique varie en fonction de ce deuxième courant de référence.

Selon un mode de réalisation, le premier courant de référence vaut, selon l'état de sortie de l'élément de conversion, 1-1/n fois ou 1+1/n fois le deuxième courant de référence, n représentant un entier.

Selon un mode de réalisation, le deuxième courant de référence est fourni par un bolomètre écranté et/ou le deuxième courant de référence est fourni par un bolomètre fortement couplé thermiquement avec la température du circuit.

Selon un mode de réalisation, le circuit comprend un dispositif d'interprétation numérique, tel qu'un microprocesseur, relié à la sortie du convertisseur analogique-numérique, apte à délivrer une valeur numérique représentative du courant Ibol en fonction de ladite série de mots numériques en sortie du convertisseur analogique-numérique.

Selon un mode de réalisation, le circuit de mesure comprend en outre un filtre numérique placé entre la sortie du convertisseur analogique-numérique et ledit dispositif d'interprétation numérique.

Selon un mode de réalisation, le circuit est de type imageur thermique, et les capteurs résistifs sont des bolomètres agencés en matrice, avec plusieurs colonnes, les bolomètres d'une même colonne partageant un même circuit de mesure, des moyens de sélection permettant de sélectionner un des bolomètres de la colonne et de le relier au circuit.

Selon un mode de réalisation, chaque colonne de bolomètres est reliée à un circuit de mesure et le deuxième courant de référence est commun à plusieurs convertisseurs numérique-analogique de différents circuits de mesure.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 décrite précédemment représente de façon très schématique un exemple classique de circuit de mesure d'un élément bolométrique ;
la figure 2 décrite précédemment illustre un exemple d'imageur bolométrique matriciel ;
la figure 3 représente un mode de réalisation d'un circuit de mesure pour élément thermorésistif de type bolomètre ;
la figure 4 illustre par des chronogrammes le fonctionnement du circuit de la figure 3 ;
la figure 5 représente un mode de réalisation d'un détail de la figure 3 ;
la figure 6 illustre le fonctionnement du circuit de la figure 5 ; et
la figure 7 représente un autre mode de réalisation d'un détail de la figure 3.

### Description détaillée

De mêmes éléments ont été désignés par de mêmes références aux différentes figures. Par souci de clarté, seuls les éléments utiles à la compréhension des modes de réalisation qui vont être décrits ont été représentés et seront détaillés. En particulier, l'exploitation des mesures effectuées pour reconstituer des images n'a pas été détaillée, les modes de réalisation décrits étant compatibles avec l'exploitation usuelle de mesures fournies par des imageurs bolométriques. De plus, lorsque l'on fait référence aux expressions "approximativement", "de l'ordre de" ou "environ", cela signifie à 10% près, et lorsque l'on mentionne une identité ou une égalité, cela signifie aux dispersions technologiques près.

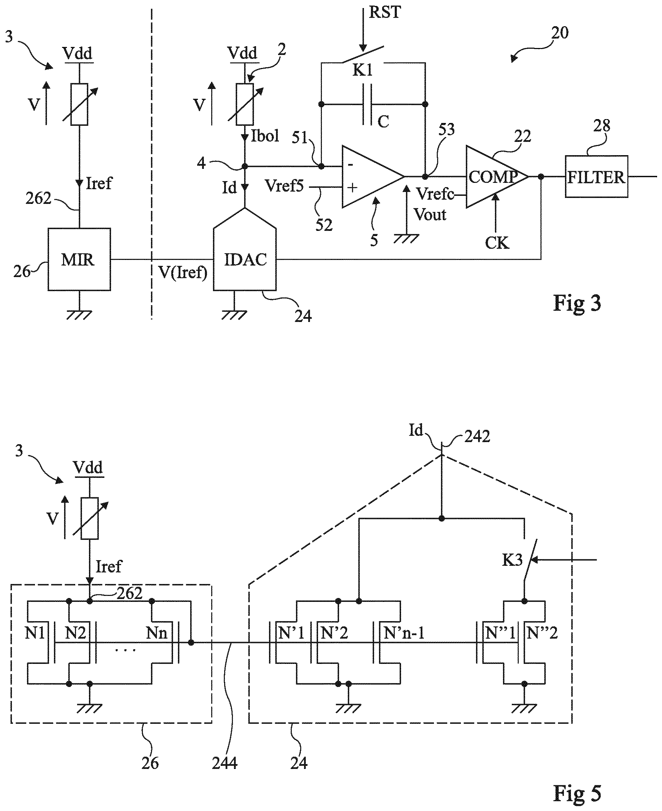

La figure 3 représente, de façon schématique, un mode de réalisation d'un circuit 20 de mesure de la résistance d'une thermistance de type bolomètre. On retrouve un élément de mesure 2 constitué d'un bolomètre dont la tension V à ses bornes est contrôlée. Pour simplifier, on se contente de représenter une tension V aux bornes du bolomètre 2, l'exemple d'un transistor en série avec le bolomètre tel que décrit en figure 1 pouvant également s'appliquer ici. La tension V est typiquement de l'ordre de 1 à 2 volts. On retrouve également un montage intégrateur basé sur un amplificateur opérationnel 5 dont les bornes de sortie 53 et d'entrée inverseuse 51 (-) sont interconnectées par un élément capacitif C susceptible d'être court-circuité à l'aide d'un interrupteur K1 commandé par un signal RST définissant les périodes d'intégration, et dont la borne d'entrée non-inverseuse (+) reçoit un potentiel continu de référence Vref5.

Selon ce mode de réalisation, une source de courant 24, prélevant un courant d'ébasage Id, est connectée à l'entrée 51 de l'amplificateur 5 (point milieu 4 de l'association en série du bolomètre 2 et de la source de courant d'ébasage) et la valeur du courant d'ébasage est asservie sur l'évolution de la tension de sortie Vout du montage intégrateur.

Plus précisément, selon le mode de réalisation de la figure 3, la borne de sortie 53 de l'amplificateur 5 est connectée à une première entrée d'un comparateur 22 (COMP), dont une deuxième entrée reçoit un potentiel de référence Vrefc, de préférence identique au potentiel Vref5. Le comparateur 22 est commandé par un signal d'activation CK périodique, de fréquence supérieure à la fréquence d'intégration définie par le signal RST. Plus généralement, la sortie de l'intégrateur 5 est traitée par un élément de conversion analogique-numérique sur un ou plusieurs bits.

La sortie de cet élément (ici, le comparateur 22) est fournie en entrée d'un circuit 24 de génération du courant d'ébasage Id, asservi sur la valeur de la tension de sortie Vout. Le niveau de repos du circuit de génération du courant d'ébasage est, par exemple, fourni par une source de courant de valeur Iref. Le niveau de repos est par exemple le courant d'ébasage délivré quand le signal RST est activé et que la sortie du comparateur 22 est alors égale à une des deux valeurs possibles, de préférence la valeur 0. Le circuit 24 constitue un convertisseur numérique-analogique traitant le signal numérique fourni par l'élément 22 pour générer le courant d'ébasage.

Dans le mode de réalisation illustré par la figure 3, le courant Iref est extrait d'un bolomètre de référence 3, par exemple écranté ou fortement couplé thermiquement à la température du circuit, c'est-à-dire sensible à la température du circuit uniquement. Ce bolomètre 3 est connecté au convertisseur 24 par l'intermédiaire d'un montage 26 de miroir de courant (MIR). Comme pour le bolomètre 2, le bolomètre est symbolisé par une résistance variable présentant, à ses bornes, une tension V approximativement fixe.

La figure 4 illustre, sous forme de chronogrammes, le fonctionnement du montage de la figure 3. Un premier chronogramme représente un exemple de valeurs de la tension Vout fournie en sortie de l'intégrateur 5, pour une valeur donnée du courant de référence Iref. On se place donc en régime établi, c'est-à-dire que l'on suppose que la valeur Iref est stable (que la température ne varie pas) dans la plage temporelle représentée. En pratique, la valeur Iref est susceptible de varier. Un deuxième chronogramme fournit un exemple du niveau V22 fourni en sortie du comparateur 22. Un troisième chronogramme illustre l'allure du signal CK périodique de déclenchement du comparateur 22.

Dans cet exemple, on suppose un déclenchement de la comparaison sur le front montant du signal d'horloge CK. La période du signal CK est inférieure à la période du signal RST fixant les durées d'intégration, typiquement dans un rapport de 128 à 512, de préférence représentant une puissance de 2 pour simplifier le traitement numérique. On notera qu'avec un rapport de l'ordre de 16 (choisi car multiple de deux), on arrive déjà à obtenir des résultats intéressants. On prendra donc un rapport au moins égal à 10, et si possible supérieur à 100 pour avoir une précision de mesure très bonne.

On suppose une diminution de la résistance du bolomètre 2 se traduisant, côté tension de sortie, par une augmentation de la tension Vout. En l'absence du dispositif de contre-réaction, cette tension augmenterait (pointillés p) jusqu'à atteindre la tension d'alimentation Vdd d'où une saturation de l'intégrateur. Grâce au comparateur 22 et à la contre-réaction sur le convertisseur 24, la tension Vout oscille autour du niveau Vrefc. Cela se traduit, sur la tension de sortie du comparateur 22, par un signal numérique qui peut être interprété comme un train de bits fournissant, sur la période d'intégration fixée par le signal RST, une valeur numérique représentative de la résistance du bolomètre donc de la mesure effectuée.

Comme cela est visible en figure 4, la tension Vout est alternativement croissante et décroissante. La pente est croissante tant que la sortie du comparateur est positive et inversement. La pente est positive si le courant du bolomètre 2 Ibol est supérieur au courant d'ébasage Id, et inversement. On voit donc que le courant Id est alternativement supérieur et inférieur au courant Ibol et que sa valeur est réactualisée, c'est-à-dire conservée ou modifiée, à chaque échantillonnage de la tension Vout par le comparateur 22. La tension Vout variant avec une pente positive et une pente négative qui se répètent à l'identique d'une alternance à l'autre, on en déduit que le courant d'ébasage Id+ associé à une pente négative et le courant d'ébasage Id- associé à une pente positive sont dans cet exemple toujours les mêmes.

On notera que les valeurs Id- et Id+ doivent être choisies respectivement inférieure et supérieure au courant Ibol. Dans la mesure où on ne connaît pas Ibol, car on souhaite le mesurer, il est donc nécessaire que Id- et Id+ soient respectivement inférieur et supérieur à la gamme de courant Ibol que l'on souhaite mesurer.

Dans l'exemple de la figure 3, la sortie du comparateur 22 fournit le résultat de la mesure effectuée par le bolomètre sous la forme d'un train de bits à la fréquence du signal CK. Ce signal est traité par un filtre numérique 28 (FILTER) pour fournir, au reste de l'application, la valeur de l'éclairement infrarouge reçue par le pixel. Ce filtrage numérique est de type passe-bas et prend, par exemple, la forme d'un compteur ou d'un intégrateur. L'intégrateur ou le compteur est alors réinitialisé avec la même périodicité que la période d'intégration (signal RST de commande de l'interrupteur K1).

En variante, la sortie 53 de l'amplificateur 5 est traitée par un circuit (interrupteur K2 et convertisseur 6) du type de ceux décrits en relation avec la figure 1, par exemple afin d'affiner l'estimation numérique résultant du filtrage numérique de la sortie du comparateur.

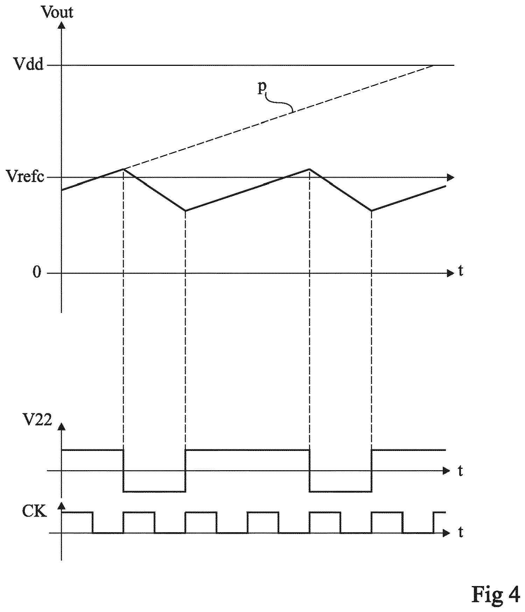

La figure 5 représente un mode de réalisation du circuit 24, associé à un exemple de réalisation du circuit 26. Selon cet exemple, on utilise n transistors MOS N1, N2,..., Nn en parallèle entre la borne 262 d'application du courant Iref provenant de l'élément 3 et la masse, les grilles de ces transistors étant interconnectées et reliées à la borne 262 (transistors montés en diodes). La borne 262 est reliée à une borne 244 fournissant, au circuit 24, une tension V(Iref). La borne 244 est reliée aux grilles de deux ensembles de transistors du convertisseur 24 pour réaliser, avec le circuit 26, le miroir de courant. Un premier ensemble comporte n-1 transistors N' connectés en parallèle dont les grilles sont interconnectées au noeud 244, dont les sources sont connectées à la masse et dont les drains sont interconnectés à la borne 242 de sortie analogique du convertisseur 24. Un deuxième sous-ensemble comporte deux transistors N"1 et N"2 connectés en parallèle entre un interrupteur K3 et la masse et dont les grilles sont interconnectées au noeud 244, l'interrupteur K3 reliant le deuxième ensemble à la borne 242 (en variante, l'interrupteur K3 est côté masse).

En utilisant des transistors N, N' et N" de taille identique, le courant traversant chacun des transistors N et N' vaut Iref/n et l'ensemble des transistors N' est traversé par un courant (n-1/n)Iref. Quand l'interrupteur K3 est fermé, chacun des transistors N" est également traversé par un courant Iref/n et un courant 2Iref/n traverse l'ensemble des transistors N". Ainsi, le courant Id tiré par le convertisseur 24 sur le noeud 4 (courant d'ébasage asservi) prend une valeur (1-1/n)Iref lorsque l'interrupteur K3 est ouvert et une valeur (1+1/n)Iref lorsque l'interrupteur K3 est fermé. On voit donc qu'en fonction du résultat fourni en sortie du comparateur 22, le courant d'ébasage du bolomètre 2 va être modifié autour de la valeur Iref, ce qui réalise l'asservissement souhaité. On notera que la valeur Iref varie en fonction de la température de fonctionnement du circuit.

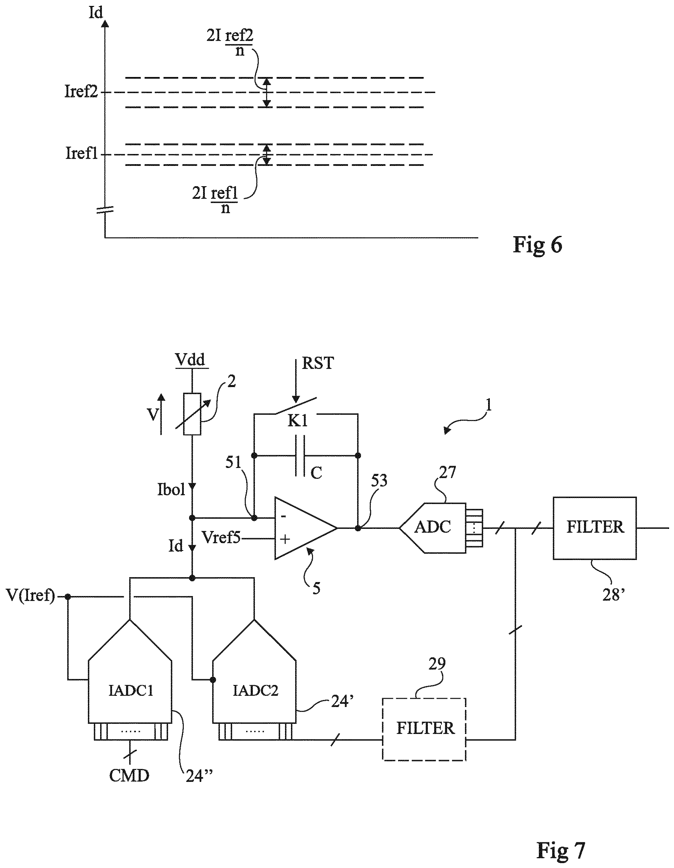

La figure 6 illustre le fonctionnement du circuit de la figure 5. Cette figure représente deux exemples de plages de variation possible du courant Id pour deux valeurs Iref1 et Iref2 prises par le courant Iref. Ces plages de variation 2Iref1/n et 2Iref2/n autour des valeurs respectives Iref1 et Iref2 représentent les plages dans lesquelles évoluera le courant Ibol dans ces deux exemples.

On comprend de la figure 6, qu'il est important que les valeurs de courant d'ébasage Id- et Id+ fourni par le convertisseur 24 varient en fonction de la température du circuit. Dans cet exemple, Id- et Id+ sont respectivement égales à (n-1)*Iref/n et (n+1)*Iref/n, et varient comme le courant Iref. Le courant Iref étant dans cet exemple issu d'un bolomètre de référence, les variations des courants Id- et Id+ suivent donc les mêmes variations que celles du courant délivré par le bolomètre Ibol. On s'assure ainsi que les valeurs Id- et Id+ sont toujours respectivement inférieure et supérieure à la plage de variation possible du courant Ibol.

Le choix du nombre n dépend de la précision et de l'excursion souhaitée autour de la valeur du courant de référence Iref. Plus n est grand, meilleure est la précision (de la conversion analogique-numérique) mais moins le circuit est robuste à l'imprécision de l'ébasage. Plus n est petit, plus grande est l'excursion autour de la valeur Iref, donc plus le circuit est robuste à l'imprécision de l'ébasage, mais moindre est la précision de la mesure. Ainsi, on effectue un compromis entre précision et excursion. A titre d'exemple particulier de réalisation, le nombre n est compris entre 2 et 256, de préférence, entre 8 et 128.

Selon une variante de réalisation, on pourra utiliser des transistors de tailles différentes ou un nombre de transistors N"2 différent (par exemple un seul transistor ou un nombre de transistors N" supérieur à 2). Selon une autre variante, on pourra utiliser une source de courant autre qu'un bolomètre pour fournir le courant Iref. On notera qu'il est préférable que le courant de référence Iref fourni varie en fonction de la température, pour suivre les fluctuations correspondantes du courant de tout bolomètre et assurer que la mesure reste possible et correcte. Ceci permettra d'éviter d'ajouter des moyens de régulation de la température du circuit, de tels moyens étant souvent complexes et coûteux.

La figure 7 représente un autre mode de réalisation du circuit 24. Selon cet exemple, la tension V(Iref) fournie par le miroir de courant 26 de la figure 3 sert de référence à deux convertisseurs numérique-analogique 24' et 24" (IDAC2 et IDAC1) de génération du courant d'ébasage. Un premier convertisseur 24' reçoit un mot numérique à convertir d'un convertisseur analogique-numérique 27 (ADC) remplaçant le comparateur 22 de la figure 3. Le convertisseur 27 échantillonne le signal à une fréquence supérieure à la fréquence de réinitialisation (RST) de l'intégrateur 5. Un second convertisseur 24" reçoit un mot numérique de consigne CMD fixe (statique) et sert à générer un courant de repos auquel s'ajoute la variation générée par le convertisseur 24'. Dans l'exemple de la figure 7, un filtre numérique 28' (FILTER) réalise une fonction de filtrage similaire à celle du convertisseur 28 de la figure 3 mais à partir d'un mot de plusieurs bits reçu en parallèle. Le cas échéant, un filtre numérique additionnel 29 (FILTER, en pointillés en figure 7) est intercalé entre les convertisseurs 27 et 24'. Ce mode de réalisation permet d'augmenter la capacité de réglage des pentes d'évolution du signal Vout, ce qui augmente le nombre de commutations autour de la valeur Vref5 en sortie de l'amplificateur 5, et ainsi la précision.

Le cas échéant, un même convertisseur analogique-numérique est utilisé soit en boucle ouverte comme en figure 1 (convertisseur 6) soit dans la boucle de régulation (convertisseur 27). Le circuit de mesure 1 possède alors deux modes de fonctionnement.

Un avantage des modes de réalisation qui ont été décrits est qu'il est désormais possible de s'affranchir des problèmes de saturation des circuits de mesure des bolomètres. De plus, l'excursion de tension en sortie de l'intégrateur étant rendue plus faible que dans les dispositifs connus, il est possible en pratique de faire fonctionner le circuit avec des tensions plus faibles. Alternativement, ou de façon complémentaire, il est possible de réduire la taille de la capacité du condensateur C de l'intégrateur. La réduction de la capacité permet en outre d'augmenter le gain de l'intégrateur (pente du signal de sortie Vout) et par conséquent d'augmenter la précision de la mesure par augmentation de la fréquence de changement de la sortie du convertisseur analogique-numérique.

Bien que l'on puisse affecter un bolomètre de référence à chaque pixel, le bolomètre de référence peut désormais facilement être partagé entre plusieurs circuits 20 dans un agencement matriciel, voire même pour l'ensemble de la matrice. Dans ce dernier cas, la surface occupée par l'ensemble de l'imageur se trouve considérablement réduite.

Selon une autre variante, on pourra utiliser plusieurs bolomètres de référence (de préférence, partagés par plusieurs circuits 20) en les moyennant pour améliorer encore la précision.

Un autre avantage est que le circuit décrit est compatible avec les circuits habituellement utilisés en aval des circuits de mesure et en particulier avec tout traitement effectué côté numérique sur l'interprétation des mesures. En effet, le train de bits délivré en sortie du comparateur dans l'exemple représenté en figure 3 ou la série de mots numériques délivrée par le convertisseur analogique-numérique de l'exemple représenté en figure 7, peuvent aisément être interprétés par les circuits de traitement numériques habituels, tels qu'un intégrateur numérique, un filtre passe-bas numérique ou leurs fonctions équivalentes réalisées sous la forme d'un programme dans un microprocesseur ou circuit de traitement numérique. Dans le cas, quasi indispensable où un filtre 28, 28' est placé en sortie de conversion analogique-numérique, le traitement numérique est bien entendu réalisé après ce filtre.

En outre, dans chacun des exemples représentés le convertisseur analogique-numérique est très simple, cas du comparateur, ou relativement simple (ADC sur 2 bits par exemple) comparativement au système de l'état de l'art pour lesquels le convertisseur analogique-numérique doit être relativement gros, sur 12, 14 bits pour assurer une précision suffisante de la mesure. En comparaison, un filtre numérique est relativement peu encombrant et consomme nettement moins. Un circuit selon l'invention consomme d'ailleurs beaucoup moins qu'un circuit classique (plus besoin d'ADC), la consommation étant typiquement réduite d'un facteur 5.

De plus, on notera que dans chacun des exemples décrits, le courant d'ébasage Id est en fait constitué d'un courant fixe ou courant de repos Ir, de valeur constante pendant une période d'intégration, et d'un courant variable Iv. Dans l'exemple de la figure 5 et de la figure 7, le courant de repos Ir correspond au courant d'ébasage minimal Id- et l'on vient rajouter un courant variable Iv, positif ou nul, à ce courant de repos Ir. Néanmoins, l'homme de l'art peut aisément imaginer une variante de réalisation dans laquelle le courant de repos serait par exemple une valeur intermédiaire dans la plage de valeurs possibles pour le courant Ibol (pour une température donnée) et le courant variable Iv pourrait s'additionner ou se retrancher au courant de repos Ir (en prévoyant par exemple des transistors complémentaires reliés respectivement à la masse ou à la tension d'alimentation).

En outre, la présente invention pourra aisément être combinée à l'invention décrite dans l'autre demande de brevet de la demanderesse, ayant comme numéro de publication WO 2010/106286 A1. Cette invention vise à éliminer les erreurs de mesure liées à la dispersion technologique des bolomètres. En effet, pour un même flux thermique (ou autrement dit, un même flux lumineux infrarouge par exemple), les bolomètres peuvent présenter des courants Ibol différents en fonction de leurs paramètres technologiques. Cette autre invention prévoit ainsi d'ajouter des générateurs de courants supplémentaires 205, 206, 207 au circuit de mesure afin d'ajouter ou soustraire un courant d'adaptation Ia au courant d'ébasage général Ib fourni par un bolomètre écranté. Chaque générateur de courant supplémentaire est sélectionnable et la sélection est fonction d'une valeur numérique de configuration prédéfinie pour chaque bolomètre. Les valeurs numériques de configuration sont définies lors d'une phase de calibration au cours de laquelle on réalise plusieurs mesures d'une même image et on recherche la bonne sélection des générateurs de courants supplémentaires par approximations successives. Lors de chaque essai, avec une sélection donnée des générateurs de courant, on réalise une lecture classique en laissant l'intégrateur intégrer pendant une durée d'intégration prédéfinie et on compare après chaque intégration la valeur en sortie de l'intégrateur avec une valeur de référence. Au fur et à mesure des essais, le circuit converge vers une configuration optimale des générateurs de courants supplémentaires permettant d'avoir un écart moindre entre une tension de référence Vref et la tension en sortie Vs de l'intégrateur à l'issue d'une phase d'intégration. La configuration optimale obtenue pour le bolomètre en cours de calibration est mémorisée, puis la même procédure est appliquée pour les autres bolomètres. Une fois la calibration terminée, les valeurs de configuration mémorisées vont être appliquées lors de l'utilisation de l'imageur, pour réaliser des images. Ainsi, lorsqu'une lecture d'un bolomètre sélectionné est réalisée par le circuit de mesure, on active ou non les générateurs de courant supplémentaires en fonction de la configuration mémorisée pour le bolomètre sélectionné. Une même configuration de sélection des générateurs de courant supplémentaires est appliquée pendant toute la durée d'intégration et la tension en sortie de l'intégrateur va varier de façon monotone (soit croissante, soit décroissante) en fonction de la différence entre le courant du bolomètre Ibol et le courant d'ébasage « adapté », correspondant à Ib (ébasage général) + Ia (ébasage adaptatif associé au bolomètre sélectionné). La tension en sortie de l'intégrateur, à la fin de la période d'intégration, est alors, de façon classique, représentative du courant traversant le bolomètre sélectionné.

L'association des deux idées consiste alors à adapter, pour chaque bolomètre, le courant de repos Ir (part fixe du courant d'ébasage Id) pour tenir compte de la dispersion technologique du bolomètre sélectionné. En d'autres termes, le courant de repos Ir peut être constitué d'un courant de repos global Ir-global identique pour tous les bolomètres et d'un courant de repos Ir-spécifique adapté à chaque bolomètre et prédéfini selon une procédure de calibration préalable, telle que celle expliquée dans le document susmentionné. Comme indiqué précédemment, le courant Ir (égal à Ir-global + Ir-spécifique) s'ajoute au courant variable Iv (participant à la lecture « delta-sigma ») pour fournir le courant Id, délivré par le convertisseur numérique-analogique.

Un mode de réalisation pratique de cette combinaison d'idées consiste par exemple à rajouter au convertisseur numérique-analogique de la figure 5 des transistors de type NMOS M1, M2 à Mk reliés par leur grille au noeud 244 et associés chacun, par leur drain, à un interrupteur de sélection relié par ailleurs au noeud 242 et qui sera rendu conducteur ou non en fonction de la valeur de configuration mémorisée pour le bolomètre sélectionné. Le nombre et la dimension des transistors N' destinés à fournir le courant Ir-global, et le nombre et la dimension des transistors M destinés à fournir le courant Ir-spécifique sera adapté de sorte que les valeurs minimale et maximale du courant Id (égal à Ir-global + Ir-spécifique + Iv) soient respectivement inférieure et supérieure à la plage de courant possible pour un bolomètre.

En outre, comme l'aura remarqué l'homme de l'art, les circuits décrits comprennent l'ensemble des éléments d'un convertisseur de type delta-sigma (hormis le traitement numérique post filtre qui n'est pas représenté). La mesure est ainsi réalisée grâce à une « boucle » delta-sigma recevant un signal d'entrée (Ibol-Id-partie fixe) auquel on ajoute/soustrait un courant de rétroaction (Id-partie variable), le tout étant intégré par l'intégrateur 24/24', converti par le convertisseur analogique-numérique 22/27, la rétroaction étant réalisée par le convertisseur numérique-analogique 24/24'. On notera que la fréquence du signal CK, appelée fréquence d'échantillonnage ci-dessus, correspond en fait à la fréquence de « sur-échantillonnage » si on utilise les termes courant des convertisseurs delta-sigma ; la fréquence de réinitialisation du signal RST (qui permet de fixer les périodes d'intégration) correspondrait alors à la fréquence d'échantillonnage.

Un autre avantage est que la mise en oeuvre ne nécessite pas de modifier les signaux de commande définissant la période d'intégration. Seul le signal d'horloge de l'élément de conversion analogique-numérique 22 ou 27 doit être prévu.

Un autre avantage est qu'il est désormais possible de se passer d'un élément de régulation de la température du circuit, ce qui constitue une économie importante.

Divers modes de réalisation ont été décrits. Diverses variantes et modifications apparaîtront à l'homme de l'art. En particulier, la mise en oeuvre pratique des modes de réalisation qui ont été décrits est à la portée de l'homme du métier à partir des indications fonctionnelles données ci-dessus et en utilisant des techniques de conception en elles-mêmes usuelles.

## Revendications

1. Circuit comprenant au moins un bolomètre (2), et au moins un circuit de mesure d'un courant Ibol traversant Le bolomètre (2), comprenant :
un intégrateur (5) intégrant une information représentative de la différence entre un courant (Ibol) traversant le bolomètre et un premier courant de référence Id pendant une période d'intégration ;
un convertisseur analogique-numérique (22, 27) recevant la sortie de l'intégrateur (5) et délivrant en sortie un mot numérique de sortie sur au moins un bit, au rythme d'une commande d'échantillonnage ;
un convertisseur numérique-analogique (24, 24') relié à la sortie du convertisseur analogique-numérique et délivrant ledit premier courant de référence Id, la valeur du premier courant de référence étant équivalent à un courant de repos Ir de valeur fixe pendant une période d'intégration auquel on additionne et/ou soustrait un courant variable Iv pendant la période d'intégration et dont la valeur à un moment donné est fonction de la valeur du mot numérique présent sur la sortie du convertisseur analogique-numérique ; et
dans lequel le convertisseur analogique-numérique délivre une série de plusieurs mots numériques à la fréquence d'échantillonnage, pendant la période d'intégration, la série de mots numériques étant fonction de la différence entre le courant Ibol et le courant de repos Ir.

2. Circuit imageur selon la revendication 1, dans lequel l'intégrateur délivre un signal de sortie alternativement croissant et décroissant selon que le premier courant de référence Id prend une première ou une deuxième valeur, la valeur du signal de sortie de l'intégrateur oscillant autour d'un niveau de référence, ledit convertisseur analogique-numérique et ledit convertisseur numérique-analogique réalisant ainsi un circuit d'asservissement de la sortie de l'intégrateur sur ledit niveau de référence (Vref5).

3. Circuit selon la revendication 1 ou 2, dans lequel le convertisseur analogique-numérique est un comparateur (22) du niveau de sortie de l'intégrateur (5) par rapport à un seuil (Vrefc) et délivre un mot numérique sur un seul bit.

4. Circuit selon la revendication 1 ou 2, dans lequel le convertisseur analogique-numérique (27) délivre un mot numérique sur plusieurs bits.

5. Circuit selon l'une quelconque des revendications 3 et 4, dans lequel la commande d'échantillonnage est un signal (CK) périodique ayant une fréquence d'échantillonnage supérieure à une fréquence de réinitialisation (RST) de l'intégrateur (5).

6. Circuit selon la revendication 5, dans lequel la fréquence d'échantillonnage (CK) est au moins 10 fois plus élevée que la fréquence de réinitialisation (RST) de l'intégrateur (5).

7. Circuit selon l'une quelconque des revendications 3 à 6, dans lequel ledit convertisseur numérique-analogique (24, 24') reçoit une information (V(Iref)) représentative d'un deuxième courant de référence Iref et dans lequel le premier courant de référence Id délivré par le convertisseur numérique-analogique varie en fonction de ce deuxième courant de référence.

8. Circuit selon la revendication 7, dans lequel le premier courant de référence Id vaut, selon l'état de sortie de l'élément de conversion (22), 1-1/n fois ou 1+1/n fois le deuxième courant de référence Iref, n représentant un entier.

9. Circuit selon la revendication 7 ou 8, dans lequel le deuxième courant de référence Iref est fourni par un bolomètre écranté (3) et/ou dans lequel le deuxième courant de référence (Iref) est fourni par un bolomètre fortement couplé thermiquement avec la température du circuit.

10. Circuit selon l'une des revendications précédentes, dans lequel le courant de repos Ir est adapté à chaque bolomètre et est défini pour tenir compte des variations technologiques des bolomètres, le courant de repos Ir adapté à un bolomètre donné étant égal à la somme d'une part d'un courant global Ir-global, identique pour chaque bolomètre, et d'autre part d'un courant de repos spécifique à chaque bolomètre Ir-spécifique.

11. Circuit selon l'une des revendications précédentes, comprenant un dispositif d'interprétation numérique, tel qu'un microprocesseur, relié à la sortie du convertisseur analogique-numérique, apte à délivrer une valeur numérique représentative du courant Ibol en fonction de ladite série de mots numériques en sortie du convertisseur analogique-numérique.

12. Circuit selon la revendication 11, dans lequel le circuit de mesure comprend en outre un filtre numérique (28 ; 28') placé entre la sortie du convertisseur analogique-numérique et ledit dispositif d'interprétation numérique.

13. Circuit selon l'une des revendications précédentes, de type imageur thermique, dans lequel les capteurs résistifs sont des bolomètres agencés en matrice, avec plusieurs colonnes, les bolomètres d'une même colonne partageant un même circuit de mesure, des moyens de sélection permettant de sélectionner un des bolomètres de la colonne et de le relier au circuit.

14. Circuit imageur thermique selon la revendication 13 dans son rattachement à la revendication 7, dans lequel chaque colonne de bolomètres est reliée à un circuit de mesure et dans lequel le deuxième courant de référence Iref est commun à plusieurs convertisseurs numérique-analogique de différents circuits de mesure.

## Patentansprüche

1. Schaltung, die zumindest ein Bolometer (2) und mindestens eine Schaltung zum Messen eines Stroms Ibol aufweist, der durch das Bolometer (2) fließt, welche Folgendes aufweist:
ein Integrationselement (5), welches eine Information, die eine Differenz zwischen einem Strom (Ibol), der durch das Bolometer fließt, und einen ersten Referenzstrom Id darstellt, während einer Integrationsperiode integriert;
einen Analog/Digital-Wandler (22, 27), der die Ausgangsgröße des Integrationselementes (5) aufnimmt und ein digitales Ausgangswort über mindestens ein Bit ausgibt, und zwar mit der Rate eines Tast- bzw. Sampling-Steuersignals;
einen Digital/Analog-Wandler (24, 24'), der mit dem Ausgang des Analog/Digital-Wandlers verbunden ist und den ersten Referenzstrom Id liefert, wobei der Wert des ersten Referenzstroms äquivalent mit einem Ruhestrom Ir mit festem Wert während einer Integrationsperiode ist, zu welchem ein variabler Strom Iv während der Integrationsperiode addiert wird und/oder von diesem subtrahiert wird, und wobei dessen Wert eine Funktion des Wertes des digitalen Wortes ist, welches am Ausgang des Analog/Digital-Wandlers vorhanden ist; und
wobei der Analog/Digital-Wandler eine Reihe einer Vielzahl von digitalen Worten mit der Tast- bzw. Sampling-Frequenz während der Integrationsperiode liefert, wobei die Reihe von digitalen Worten eine Funktion der Differenz zwischen dem Strom Ibol und dem Ruhestrom Ir ist.

2. Bildaufnahmeschaltung nach Anspruch 1, wobei das Integrationselement ein Ausgangssignal liefert, welches abwechselnd zunimmt und abnimmt, und zwar gemäß dem, ob der erste Referenzstrom einen ersten oder einen zweiten Wert annimmt, der Wert des Ausgangssignals des Integrationselementes um einen Referenzpegel oszilliert, wobei der Analog/DigitalWandler und der Digital/Analog-Wandler somit eine Schaltung zur Steuerung der Ausgabe des Integrationselementes mit dem Referenzpegel (Vref5) bildet.

3. Schaltung nach Anspruch 1 oder 2, wobei der Analog/Digital-Wandler ein Komparator bzw. Vergleichselement (22) für den Ausgangspegel des Integrationselementes (5) mit einer Schwelle (Vrefc) ist und ein digitales Wort über ein einziges Bit liefert.

4. Schaltung nach Anspruch 1 oder 2, wobei der Analog/Digital-Wandler (27) ein digitales Wort über eine Vielzahl von Bits liefert.

5. Schaltung nach einem der Ansprüche 3 und 4, wobei das Tast- bzw. Sampling-Steuersignal ein periodisches Signal (CK) ist, welches eine größere Sampling-Frequenz als eine Rücksetz- bzw. Reset-Frequenz (RST) des Integrationselementes (5) hat.

6. Schaltung nach Anspruch 5, wobei die Sampling-Frequenz (CK) zumindest 10 mal größer als die Reset-Frequenz (RST) des Integrationselementes (5).

7. Schaltung nach einem der Ansprüche 3 bis 6, wobei der Digital/AnalogWandler (24, 24') Information (V(Iref)) aufnimmt, welche einen zweiten Referenzstrom Iref darstellt, und wobei der erste Referenzstrom Id, der durch den Digital/Analog-Wandler geliefert wird, gemäß diesem zweiten Referenzstrom variiert.

8. Schaltung nach Anspruch 7, wobei der erste Referenzstrom Id, gemäß dem Ausgangszustand des Umwandlungselementes (22), gleich 1-1/n Mal oder 1+1/n Mal dem zweiten Referenzstrom Iref ist, wobei n für eine ganze Zahl steht.

9. Schaltung nach Anspruch 7 oder 8, wobei der zweite Referenzstrom Iref durch ein abgeschirmtes Bolometer (3) geliefert wird und/oder wobei der zweite Referenzstrom Iref durch ein Bolometer geliefert wird, welches stark thermisch mit der Temperatur der Schaltung gekoppelt ist.

10. Schaltung nach einem der vorhergehenden Ansprüche, wobei der Ruhestrom Ir an jedes Bolometer angepasst ist, und so definiert ist, dass er technologische Variationen des Bolometers berücksichtigt, wobei der Ruhestrom Ir, der an ein gegebenes Bolometer angepasst ist, gleich der Summe eines globalen Stroms Ir-global, der für jedes Bolometer identisch ist, einerseits und andererseits eines Ruhestroms Ir ist, der für jedes Bolometer spezifisch ist.

11. Schaltung nach einem der vorhergehenden Ansprüche, die eine digitale Interpretationseinrichtung bzw. Ausführungseinrichtung aufweist, wie beispielsweise einen Mikroprozessor, die mit dem Ausgang des Analog/Digital-Wandlers verbunden ist, wobei sie fähig ist einen digitalen Wert zu liefern, der den Strom Ibol gemäß der Reihe von digitalen Worten darstellt, und zwar am Ausgang des Analog/Digital-Wandlers.

12. Schaltung nach Anspruch 11, wobei die Messschaltung weiter ein digitales Filter (28; 28') aufweist, welches zwischen dem Ausgang des Analog/Digital-Wandlers und der digitalen Interpretationseinrichtung angeordnet ist.

13. Schaltung nach einem der vorhergehenden Ansprüche des Typs zur Thermobildaufnahme, wobei die Widerstandssensoren Bolometer sind, die in einer Anordnung mit einer Vielzahl von Spalten angeordnet sind, wobei die Bolometer der gleichen Spalte die gleiche Messschaltung gemeinsam verwenden, wobei Auswahlmittel ermöglichen, eines der Bolometer in der Spalte auszuwählen und es mit der Schaltung zu verbinden.

14. Thermobildaufnahmeschaltung nach Anspruch 13 und Anspruch 7, wobei jede Spalte von Bolometern mit einer Messschaltung verbunden ist, und wobei der zweite Referenzstrom Iref für eine Vielzahl von Digital/Analog-Wandlern von unterschiedlichen Messschaltungen gleich ist.

## Claims

1. A circuit comprising at least one bolometer (2) and at least one circuit for measuring a current Ibol flowing through a bolometer (2), comprising:
an integrator (5) of information representative of the difference between a current (Ibol) flowing through the bolometer and a first reference current Id during an integration period;
an analog-to-digital converter (22, 27) receiving the output of the integrator (5) and outputting a digital output word over at least one bit, at the rate of a sampling control signal;
a digital-to-analog converter (24, 24') connected to the output of the analog-to-digital converter and delivering said first reference current Id, the value of the first reference current being equivalent to a quiescent current Ir of fixed value during our integration period to which is added and/or substracted a variable current Iv during the integration period and the value of which is a function of the value of the digital word present on the output of the analog-to-digital converter; and
wherein the analog-to-digital converter delivers a series of a plurality of digital words at the sampling frequency, during the integration period, the series of digital words being a function of the difference between the current Ibol and the quiescent current Ir.

2. The imager circuit of claim 1, wherein the integrator delivers an output signal alternately increasing and decreasing according to whether the first reference current takes a first or a second value, the value of the output signal of the integrator oscillating around a reference level, said analog-to-digital converter and said digital-to-analog converter thus forming a circuit for controlling the output of the integrator with said reference level (Vref5).

3. The circuit of claim 1 or 2, wherein the analog-to-digital converter is a comparator (22) of the output level of the integrator (5) with a threshold (Vrefc) and delivers a digital word over a single bit.

4. The circuit of claim 1 or 2, wherein the analog-to-digital converter (27) delivers a digital word over a plurality of bits.

5. The circuit of any of claims 3 and 4, wherein the sampling control signal is a periodic signal (CK) having a sampling frequency greater than a reset frequency (RST) of the integrator (5).

6. The circuit of claim 5, wherein the sampling frequency (CK) is at least 10 times greater than the reset frequency (RST) of the integrator (5).

7. The circuit of any of claims 3 to 6, wherein said digital-to-analog converter (24, 24') receives information (V(Iref)) representative of a second reference current Iref, and wherein the first reference current Id delivered by the digital-to-analog converter varies according to this second reference current.

8. The circuit of claim 7, wherein the first reference current Id is equal, according to the output state of the conversion element (22), to 1-1/n times or 1+1/n times the second reference current Iref, n standing for an integer.

9. The circuit of claim 7 or 8, wherein the second reference current Iref is supplied by a shielded bolometer (3) and/or wherein the second reference current (Iref) is supplied by a bolometer strongly thermally coupled with the circuit temperature.

10. The circuit of any of the foregoing claims, wherein the quiescent current Ir is adapted to each bolometer, and is defined to take into account technological variations of the bolometers, the quiescent current Ir adapted to a given bolometer being egual to the sum of a global current Ir-global identical for each bolometer or the one hand, and of a quiescent current Ir specific which is specific to each bolometer on the other hand.

11. The circuit of any of the foregoing claims, comprising a digital interpretation device, such as a microprocessor, connected to the output of the analog-to-digital converter, capable of delivering a digital value representative of current Ibol according to said series of digital words at the output of the analog-to-digital converter.

12. The circuit of claim 11, wherein the measurement circuit further comprises a digital filter (28; 28') placed between the output of the analog-to-digital converter and said digital interpretation device.

13. The circuit of any of the foregoing claims, of thermal imager type, wherein the resistive sensors are bolometers arranged in an array, with a plurality of columns, the bolometers of a same column sharing a same measurement circuit, selection means enabling to select one of the bolometers in the column and to connect it to the circuit.

14. The thermal imager circuit of claim 13 and of claim 7, wherein each bolometer column is connected to a measurement circuit and wherein the second reference current (Iref) is common to a plurality of digital-to-analog converters of different measurement circuits.
